# EUROPEAN PATENT APPLICATION

(11) **EP 3 929 128 A1**
(43) Date of publication of application: **29.12.2021**
(21) Application number: 20215727.7
(22) Date of filing: 18.12.2020
(51) Int. Cl.: B66B 5/00, B66B 19/00

(54) **SENSOR ORIENTATION INDICATOR FOR CONDITION BASED MAINTENANCE (CBM) SENSING**

(30) Priority: 27.06.2020 US 202016914336
(71) Applicant: Otis Elevator Company, Farmington, Connecticut 06032 (US)
(72) Inventor: WITCZAK, Tadeusz Pawel, Farmington, CT Connecticut 06032 (US); BOGLI, Craig, Farmington, CT Connecticut 06032 (US)
(74) Representative: Dehns

(57) **Abstract**

Disclosed is a system for installing a sensor (30h) to a passenger conveyance system, wherein the sensor (30h) is configured for being positioned on the passenger conveyance system; and an on-board indicator or a mobile device (320) is in communication with the sensor (30h), configured for providing feedback indicative of whether the sensor (30h) is aligned to an axis (310) within an alignment tolerance.

## Description

### BACKGROUND

The disclosed embodiments relate to sensors for elevator systems and more specifically to a sensor orientation indicator for condition based maintenance (CBM) sensing.

In an elevator management system, information coming from information of things (IoT) sensors may need to be properly oriented for algorithms to work properly and provide accurate condition based maintenance (CBM) data. Otherwise additional processing of the data may be required to correct for errors induced from an improper alignment. The cumulative impact of the additional processing may result in a reduction in efficiency, sensor life and/or battery life.

### SUMMARY

Disclosed is a system for installing a sensor to a passenger conveyance system, including: the sensor configured for being positioned on the passenger conveyance system; and an on-board indicator or a mobile device in communication with the sensor, configured for providing feedback indicative of whether the sensor is aligned to an axis within an alignment tolerance.

In addition to one or more of the above disclosed aspects of the system, or as an alternate, the sensor is configured to sense vibrations, and wherein the axis is parallel to gravity.

In addition to one or more of the above disclosed aspects of the system, or as an alternate, the sensor is configured to enter a set-up mode and thereafter transmit sensor alignment data to the mobile device, as the feedback indicative of whether the sensor is aligned to the axis within the alignment tolerances.

In addition to one or more of the above disclosed aspects of the system, or as an alternate, the sensor enters the set-up mode when initially powered or when power is restored.

In addition to one or more of the above disclosed aspects of the system, or as an alternate, the sensor is configured to communicate with the mobile device via a wireless network, directly or via an intermediate computing device that includes one or more of a beacon, an elevator controller, a primary gateway, a secondary gateway, and a cloud service.

In addition to one or more of the above disclosed aspects of the system, or as an alternate, one or more of the sensor, the intermediate computing device, and the mobile device is configured to process the sensor alignment data in whole or part.

In addition to one or more of the above disclosed aspects of the system, or as an alternate, the mobile device is configured to provide a graphical alignment indicia illustrating an alignment accuracy of the sensor relative to the axis.

In addition to one or more of the above disclosed aspects of the system, or as an alternate, the graphical alignment indicia includes lights on the sensor that activate or deactivate depending on an alignment accuracy of the sensor.

In addition to one or more of the above disclosed aspects of the system, or as an alternate, the graphical alignment indicia is a binary option indicator, that indicates whether the sensor is aligned within the alignment tolerances relative to the axis.

In addition to one or more of the above disclosed aspects of the system, or as an alternate, the on-board indicator, that is one or more of a visual indicator, a vibratory indicator and an audible indicator, is configured to actuate when the sensor is aligned within predetermined tolerances to the axis.

Further disclosed is a method for installing a sensor to a passenger conveyance system, including: the sensor being positioned on the passenger conveyance system; and an on-board indicator or a mobile device in communication with the sensor, providing feedback indicative of whether the sensor is aligned to an axis within an alignment tolerance.

In addition to one or more of the above disclosed aspects of the method, or as an alternate, the method includes the sensor sensing vibrations, wherein the axis is parallel to gravity.

In addition to one or more of the above disclosed aspects of the method, or as an alternate, the method includes the sensor entering a set-up mode and thereafter transmitting sensor alignment data to the mobile device, as the feedback indicative of whether the sensor is aligned to the axis within the alignment tolerances.

In addition to one or more of the above disclosed aspects of the method, or as an alternate, the method includes the sensor entering the set-up mode when initially powered or when power is restored.

In addition to one or more of the above disclosed aspects of the method, or as an alternate, the method includes the sensor communicating with the mobile device via a wireless network, directly or via an intermediate computing device that includes one or more of a beacon, an elevator controller, a primary gateway, a secondary gateway, and a cloud service.

In addition to one or more of the above disclosed aspects of the method, or as an alternate, the method includes one or more of the sensor, the intermediate computing device, and the mobile device processing the sensor alignment data in whole or part.

In addition to one or more of the above disclosed aspects of the method, or as an alternate, the method includes the mobile device providing graphical alignment indicia illustrating an alignment accuracy of the sensor relative to the axis.

In addition to one or more of the above disclosed aspects of the method, or as an alternate, the method includes the graphical alignment indicia including lights on the sensor, activating or deactivating depending on an alignment accuracy of the sensor.

In addition to one or more of the above disclosed aspects of the method, or as an alternate, the method includes the graphical alignment indicia being a binary option indicator, indicating whether the sensor is aligned within the alignment tolerances relative to the axis.

In addition to one or more of the above disclosed aspects of the method, or as an alternate, the method includes the on-board indicator, that is one or more of a visual indicator, a vibratory indicator and an audible indicator, actuating when the sensor is aligned within predetermined tolerances to the axis.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
Fig. 2 is a schematic diagram depicting a communication system implemented in an elevator system according to an exemplary embodiment of the invention;
FIG. 3A is another schematic illustration of the elevator system that may employ various embodiments of the present disclosure;
FIG. 3B is a data flow diagram for a communication system associated with the elevator system according to an embodiment;
FIG. 4 shows the elevator with the sensor installed thereon;
FIG. 5 shows a mobile device with alignment indicia indicative of the sensor being misaligned on the elevator;
FIG. 6 shows the mobile device with alignment indicia indicative of the sensor being aligned on the elevator within predetermined tolerances;
FIG. 7 shows the sensor with an on-board indicator of the sensor being aligned within predetermined tolerances; and
FIG. 8 is a flowchart showing a method for installing a sensor on a passenger conveyance system; and
FIG. 9 is another flowchart showing a method for installing a sensor on a passenger conveyance system.

### DETAILED DESCRIPTION

A detailed description of one or more embodiments of the disclosed apparatus and method are presented herein by way of exemplification and not limitation with reference to the Figures.

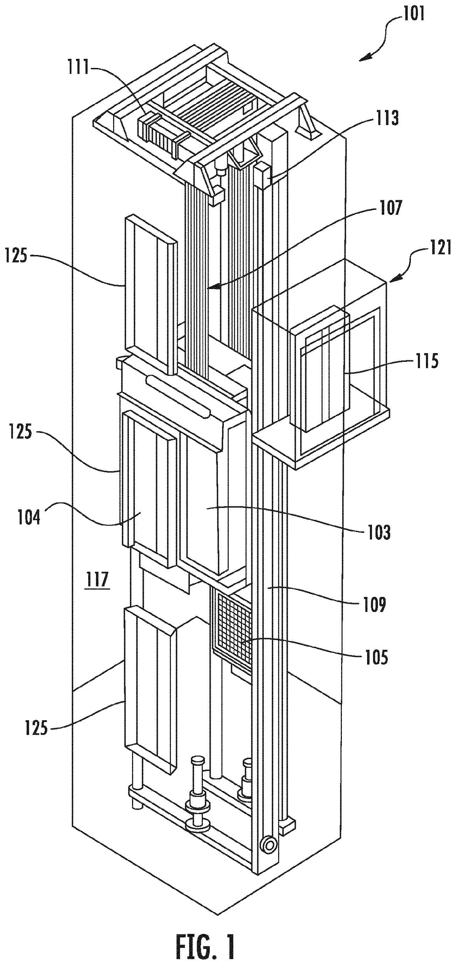

FIG. 1 is a perspective view of an elevator system 101 including an elevator car 103 having an elevator door 104, a counterweight 105, a tension member 107, a guide rail 109, a machine 111, a position reference system 113, and an elevator car controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator hoistway (hoistway) 117 and along the guide rail 109. The tension member 107 engages the machine 111, which is part of an overhead structure of the elevator system 101. The machine 111 is configured to control movement between the elevator car 103 and the counterweight 105. The position reference system 113 may be mounted on a fixed part at the top of the hoistway 117, such as on a support or guide rail, and may be configured to provide position signals related to a position of the elevator car 103 within the hoistway 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the hoistway 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the hoistway 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud. The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within the hoistway 117.

Although shown and described with a roping system including tension member 107, elevator systems that employ other methods and mechanisms of moving an elevator car within an hoistway may employ embodiments of the present disclosure. For example, embodiments may be employed in ropeless elevator systems using a linear motor to impart motion to an elevator car. Embodiments may also be employed in ropeless elevator systems using a hydraulic lift or some other mechanism to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, moving walkways, people movers, etc. Accordingly, embodiments described herein are not limited to elevator systems, such as that shown in Figure 1.

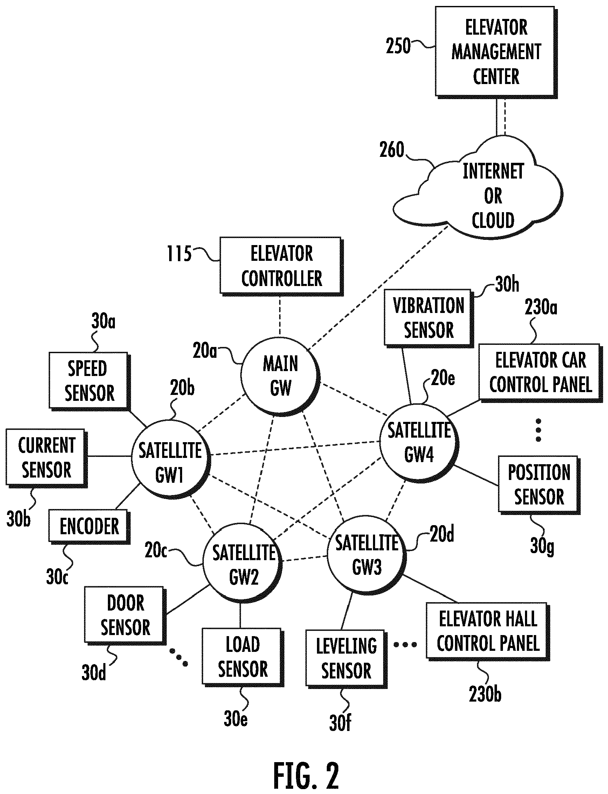

FIG. 2 is a schematic diagram depicting a communication system implemented in an elevator system according to an exemplary embodiment. The communication system shown in FIG. 2 comprises a main gateway (GW) 20a and first to fourth satellite gateways 20b-20e which are wirelessly connected to each other via a wireless local area network (WLAN). In one embodiment, there may be greater than or fewer than four satellite gateways 20b-20e. The main gateway 20a may be connected to an elevator controller 115 and each of the first to fourth satellite gateways 20b-20e is connected to at least one sensor arranged at a certain place in the elevator system 101 to collect data necessary for operation and management of the elevator system 101. For example, in FIG. 2, the first satellite gateway 20b is connected a speed sensor 30a, a current sensor 30b, and an encoder 30c, the second satellite gateway 20c is connected to a door sensor 30d and a load sensor 30e, the third satellite gateway 20d is connected with a leveling sensor 30f and an elevator hall control panel 230b, and the fourth satellite sensor 20e is connected with an elevator hall control panel 230a, a position sensor 30g and a vibration sensor 30h (which may be an accelerometer). The elevator controller panels 230a/230b may connect with the elevator controller 115 by means of electrical lines (not shown), in particular by an electric bus, e.g. a field bus such as a CAN bus, or by means of wireless data transmission.

The connection between each sensor and each gateway may be wireless or wired. Wireless connections may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same. Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radio-frequency identification (RFID) technology, used for communicating with an integrated chip (IC), e.g., on an RFID smartcard. In addition, Sub 1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems include cellular, e.g. 2G/3G/4G (etc.). The above is not intended on limiting the scope of applicable wireless technologies.

Wired connections may include, for example, cables/interfaces conforming to RS (recommended standard)-422, also known as the TIA/EIA-422, a technical standard supported by the Telecommunications Industry Association (TIA) and the Electronic Industries Alliance (EIA) that specifies electrical characteristics of a digital signaling circuit. Wired connections also include cables/interfaces conforming to RS-232, a technical standard for serial communication transmission of data, which defines signals connecting between a DTE (data terminal equipment) such as a computer terminal, and a DCE (data circuit-terminating equipment or data communication equipment), such as a modem. Wired connections may also include cables/interfaces conforming to the Modbus serial communications protocol, managed by the Modbus Organization, which is a master/slave protocol designed for use with programmable logic controllers (PLCs) and which is utilized to connect industrial electronic devices. Wired connections may also include cables/interfaces under the PROFibus (Process Field Bus) standard managed by PROFIBUS & PROFINET International (PI), and is a standard for fieldbus communication in automation technology, published as part of IEC (International Electrotechnical Commission) 61158. Wired communications may also include a Controller Area Network (CAN) bus, utilizing a CAN protocol released by the International Organization for Standards (ISO), which is a standard that allows microcontrollers and devices to exchange messages with each other in applications without a host computer. The above is not intended on limiting the scope of applicable wired technologies.

As described above, the elevator controller 115 is configured to control operation of the elevator system by, e.g. controlling the machine 111. In one embodiment, the ones of the sensors 30a-30h communicates directly with the main gateway 20a while others of the sensors 30a-30h communicate with the satellite gateways 20b-20C. In one embodiment all of the sensors 30a-30h communicate directly with the main gateway 20a. It is to be understood that the configuration depicted in FIG. 2 is exemplary. In other words, there is no limitation in the number of sensors which are connected with each of the main gateway 20a and the satellite gateways 20b-20d. For example, it may also be possible for one main gateway or one satellite gateway to be connected with one sensor or one controller. In addition, there may be other types of sensors or controllers arranged somewhere in the elevator system 101. As another example, at least one sensor like a temperature sensor may be connected to the main gateway 20. In one embodiment, all of the satellite gateways 20b-20d may be directly connected to the cloud 260 or elevator management center 250 via a wireless or wired connection. In one embodiment, some of the satellite gateways 20b-20d may be directly connected to the cloud 260 or elevator management center 250 via a wireless or wired connection and some of the satellite gateways 20b-20d may be connected to the elevator controller 115. In one embodiment, some or all of the satellite gateways 20b-20d may be connected to the elevator controller directly or indirectly through the cloud 260 or elevator management center 250 via a wireless or wired connection.

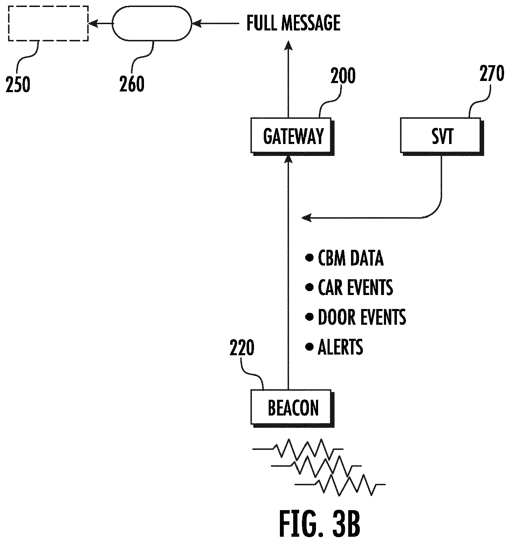

In FIG. 2, each of the sensors 30a-30h, the elevator controller 115 and the elevator control panel 230a collects data. For example, the speed sensor 31a measures a speed of an elevator car 103 in the elevator system 101, the current sensor 30b detects a working current of a motor used in the elevator system 101, and the encoder 30c detects a rotation speed of the motor, etc. The data collected by each of the sensors 30a-30h, the elevator controller 115, the elevator control panel 230a is transferred to a corresponding gateway, i.e. one of the main gateway 20a and the first to fourth gateways 20b-20d which is connected with the sensor transferring the data. Each of the satellite gateways 20b-20e receiving the data from a corresponding sensor or controller performs a predefined data processing on the received data and transfers the resulting data to the main gateway 20a via the WLAN. Alternatively, it may also be possible for the satellite gateways 20b-20e to transfer the data received from the sensors or controllers to the main gateway 20a without data processing. The main gateway 20a and the satellite gateways 20b-20e may perform edge computing. Instead of transferring all obtained raw data, each of the main gateway 20a and the satellite gateways 20b-20e performs the predefined data processing with the raw data and the processed data is transferred to the main gateway 20a. For example, in FIG. 2, all speed data detected by the speed sensor 30a does not need to be delivered to the elevator management center 250 via the main gateway 20a. Instead, the first satellite gateway 20b connected to the speed sensor 30a may be configured to transmit data only when the measured speed exceeds a predetermined threshold. For the edge computing, each of the main gateway 20a and the satellite gateways 20b-20e needs to be equipped with a data processor necessary for performing the predefined data processing. From the edge computing, real-time data processing near the source of data, i.e. a sensor, is possible and thereby the entire volume of data to be delivered through the network can be significantly decreased. The main gateway 20a is configured to pass the received data to the elevator management center 250 via the Internet or the cloud service 260 (FIG. 3B). In one embodiment, the satellite gateways 20b-20e may pass data directly to the elevator management center 250 via the Internet or the cloud service 260 without first passing through the main gateway 20a.

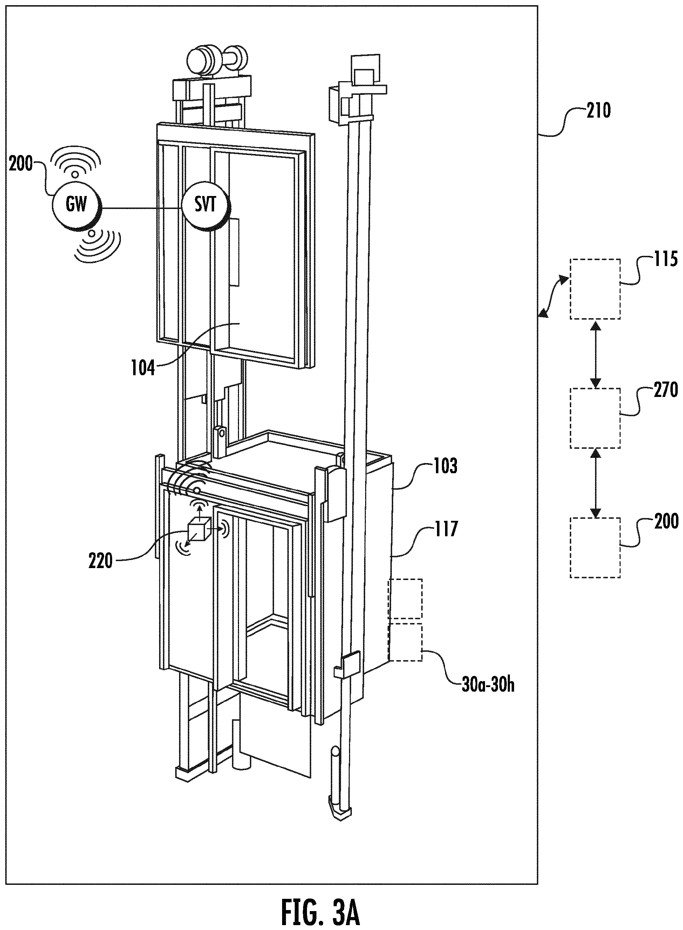

FIG. 3A is another schematic illustration of the elevator system that may employ various embodiments of the present disclosure. FIG. 3B is a data flow diagram for a communication system associated with the elevator system according to an embodiment. As shown in FIGS. 3A and 3B, the elevator system 101 may include a gateway 200, which may be any gateway 20a-20d shown in FIG. 2, which may also be located in the controller room 121. For simplicity, the gateway 200 of FIG. 3A may be construed as the main gateway 20a of FIG. 2. The gateway 200 may be configured to communicate with a controller 115 of the elevator car 103 that is operationally positioned in the hoistway 117 of a building 210. From this communication, the gateway 200 may receive car controller data (e.g., data from the elevator controller 115). The gateway 200 may be configured to communicate with a beacon 220 mounted to the elevator car 103. In one embodiment, the beacon 220 may communicate with each of the sensors 30a-30h to obtain data related to elevator car speed, current draw, door loading, leveling, position, acceleration and vibrations. The connection between the beacon 220 and the sensors 30a-30h may also be wired or wireless based on one of the protocols and standards identified above. The beacon 220 may also detect car and door events from the sensors, including a number of door openings of elevator doors 104 per hoistway landing, and elevator car starts and stops. In one embodiment, the beacon 220 may be able to process the sensor data against predetermined thresholds to identify alert conditions, which may be transmitted to the gateway 200. In one embodiment, the sensors 30a-30h may be configured for edge computing and may be able to process sensor data against predetermined thresholds to identify alert conditions. In such embodiment the beacon 220 may transmit to the gateway 200 the alert conditions identified by the sensors 30a-30h and alert conditions it (the beacon 220) identifies from the detected car and door events.

In one embodiment, the beacon 220 may transmit, unprocessed, some or all of the sensor and any other detected data to the gateway 200. In such embodiment, the gateway 200 may process the data to identify alert conditions. In one embodiment, the gateway 200 may transmit, unprocessed, some or all of the sensor data and any other beacon detected data to the elevator management center 250 or the cloud service 260 to process the data and identify alert conditions. In one embodiment data transferred by the beacon 220 to the gateway 200 may include condition based maintenance (CBM) data. The gateway 200 may transmit this data to the elevator management center 250 or the cloud service 260. The CBM data may be obtained by the beacon 220 while acting on the sensor and beacon detected data. Condition based maintenance (sometimes referred to as condition based monitoring) is maintenance that is performed when a need arises. CBM is part of an industry based predictive maintenance effort, enabled by artificial intelligence (AI) technologies and connectivity abilities. CBM is performed after one or more indicators (e.g. from the collected data) show that equipment is going to fail or that equipment performance is deteriorating. CBM may be applicable to mission-critical systems that incorporate active redundancy and fault reporting. CBM may also be applicable to non-mission critical systems that lack redundancy and fault reporting. CBM is based on using real-time data to prioritize and optimize maintenance resources, e.g., to determine equipment health, and act when maintenance is necessary. CBM utilizes instrumentation (such as the sensors) together with analytical tools to enable maintenance personnel to decide the right time to perform maintenance on equipment. CBM may minimize spare parts cost, system downtime and time spent on maintenance.

In one embodiment, the gateway 200 stitches the car controller data with the sensor data, that is then sent to the elevator management center 250 or the cloud service 260. In one embodiment, the gateway 200 transmits the car controller data with the sensor data to the elevator management center 250 or the cloud service 260, which stitches the data together. In one embodiment, the gateway 200 may be configured to communicate with the controller 115 to obtain car controller data every few seconds to every few minutes. The gateway 200 may be configured to communicate with the beacon 220 every few seconds to every few minutes to obtain sensor. The gateway 200 may be configured to transmit data to the elevator management center 250 or cloud service 260 multiple times an hour, such as every ten minutes. This way, the data sent to the elevator management center 250 or cloud service 260 may contain sufficient sets of data that may be either stitched together for identifying a time and exact location of alert conditions.

In one embodiment, the gateway 200 may be configured to wirelessly communicate with the controller 115 via a smart service tool (SSVT) 270 to obtain the car controller data. That is, a Service Tool (SVT) is a known device that allows a mechanic to obtain and modify information from within the elevator controller. Information to be viewed or modified may be parameter settings, such as duration timers, max elevator speed, addresses for each hall call button, etc. Information viewed may also be fault logs, such as time-stamped occurrences of communication errors, stuck doors, faulty switches, etc. Information viewed may also be event logs, such as time-stamped occurrences of activity events like door opened, door closed, car moved up, car parked, etc. A Smart Service Tool (SSVT) is a known device that has increased capabilities as compared with the SVT. For example, SSVT is based on technology in a smart phone so it has additional connectivity options. In some implementations, the SSVT is executable software on a mobile device such as a mobile phone or tablet. Additionally, there is the ability to add more functions to the SSVT than what is on the traditional SVT. Such capabilities include being able to store and forward large amounts of data, including for example an elevator event log, a list of parameter settings from the elevator controller, and the ability to store a new/updated software/firmware images that will be installed in the elevator controller.

For the SSVT to perform these functions, it may need to communicate with elevators controllers (such as legacy controllers) via a wired SVT port connection, which may utilize RS422 compliant connectors (or wired connectors compliant with any other one of the wired specifications identified in this disclosure). With such controllers, the use of a wireless adaptor (dongle) may facilitate the connection. Other controllers may be equipped for wireless communications, which enable for a wireless communications with the SSVT applying any one of the wireless protocols identified in this disclosure. According to the embodiments, the SSVT 270 may be used as a pass-through connection device to synchronize the gateway 200 and beacon 220, or pass relevant information from one to the other. These communications may occur when a mechanic is on the jobsite, with the SSVT 270 nearby. Alternatively, the gateway 200 may communicate with the elevator controller 115 equipped with a wireless transceiver (e.g., wireless dongle), as indicated above. Through this wireless connection, the gateway 200 may obtain the information that would normally be obtained through the wired connection with the SVT.

For certain types of the sensors 30a-30h, for example the vibration sensor 30h, a mounting orientation of the sensor 30h is important for the algorithms to work properly. To account for a skewed orientation, a reference to a gravity vector may be added to the algorithm, e.g., as a correction factor. Utilizing a correction factor may increase processor loading by at least one calculation per every axis, per every sample. Such increase in loading may negatively impact a sensor battery life overtime.

To save on number of required operations on sensor data and the increase battery life, the sensor should preferably be aligned with a gravity (g) axis during installation. However, when installing a sensor by hand, it may be difficult to align the sensor with greater accuracy than, e.g., ±5 degrees relative to the gravity vector. To complicate matters, many sensors, such as round button sensors, do not have right angles and are enclosed in housings that do not indicate the orientation of sensors elements therein.

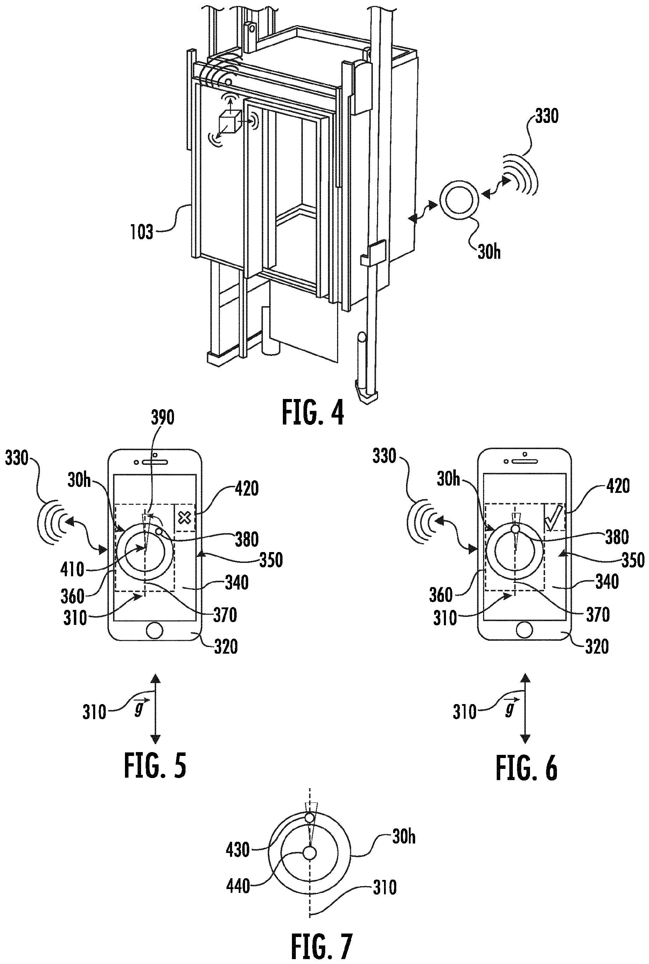

Accordingly, turning to FIGS. 4-6, a system 300 is disclosed for installing the sensor 30h (which may be the above noted vibration sensor) on the elevator car 103 so that the sensor 30h is aligned within predetermined tolerances with an axis 310 that is predetermined, such as gravity. As used herein, "aligned" means aligned within predetermined tolerances (which may be five degrees on either side of center) to the axis 310, and "misaligned" or "out of alignment" means aligned outside of the predetermined tolerances to the axis 310. In one embodiment, the tolerance may be greater than 5%. In one embodiment, the tolerance may be less than 5%.

In one embodiment, the sensor 30h may be configured to transmit sensor alignment data to a mobile device 320 via wireless network 330. The wireless network 330 may be BTLE or any other wireless network identified herein. The sensor 30h may access the wireless network 330 directly or via an intermediate computing device including one or more of the beacon 220, gateway 200 and the cloud service 260 (FIG. 3A). The sensor 30h maybe communicate with the beacon 220 wirelessly by BTLE or any one of the wireless communication protocols discussed herein or may communicate with the beacon 220 by one or more of the wired connections discussed herein. Other combinations of wired and wireless communications may be available for the sensor 30h to transmit alignment data to the mobile device 320. The sensor alignment data may be transmitted to the mobile device 320 in raw form or processed in whole or part on any of the sensor 30h, beacon 220, gateway 200, the cloud service 260 and the mobile device 320.

In one or more embodiments the sensor 30h may transmit sensor data directly to the mobile device 320. In one or more embodiments the sensor 30h may transmit senor data via any one or combination of the satellite (e.g., secondary) gateways 20b-20e to the mobile device 320. In one or more embodiments the sensor 30h may transmit senor data via the main (e.g., primary) gateway 20a to the mobile device 320. In one or more embodiments the sensor 30h may transmit senor data via the elevator controller 115 to the mobile device 320. In one or more embodiments the sensor 320 may transmit senor data via the cloud service 260 to the mobile device 320.

The mobile device 320 may be a cell phone, tablet, laptop, smart watch or other equipment fitted with, for example, a wireless enabling dongle. The mobile device 320 may include a screen 340 and may be configured to display on the screen 340 graphical alignment indicia 350 providing visual feedback that represents an alignment accuracy of the sensor 30h. The graphical alignment indicia 350 may preferably also show corrective movement required to achieve a proper alignment within predetermined tolerances such as within five degrees of alignment. The graphical alignment indicia 350 may include a first portion 360 (outlined in a dashed box herein for clarity, though such outlining is not intended on limiting the disclosure) which may be a graphical reproduction of an image of the sensor 30h.

The first portion 360 may include a first alignment marker 370 may be overlaid on the image of the sensor 30h and may be a second graphical reproduction of the axis 310 against which the sensor 30h is being aligned. A second alignment marker 380, of the first portion 360, may be a displacement pin indicator that is overlaid on the image of the sensor 30h, where the pin may be in the form of a dot, circle, box or similar indicia. As shown in FIG. 5, when the sensor 30h is out of alignment, the second alignment marker 380 may be spaced apart from the axis 310 and may be a first color (such as red). As shown in FIG. 6, the first alignment marker 370 may be illustrated on the axis 310 and may be a second color (such as green) when the sensor 30h is properly aligned.

The resulting image graphically implies a corrective direction of movement, e.g., rotation, of the sensor 30h relative to the axis 310 to achieve proper alignment. More explicitly, however, a third alignment marker 390, of the first portion 360, may be a directional movement indicator that is spaced apart from the image of the sensor 30h, and graphically indicates a direction of movement relative to a center 410 of the sensor 30h (e.g., a rotational movement) to align the sensor 30h to the axis 310. For example, the third alignment marker 390 is a rotational indicator. The third alignment marker 390 may be an arrow that directs rotation of the sensor 30h about its center 410 relative to the axis 310.

A second portion 420 of the graphical alignment indicia 350 (outlined in a dashed box herein for clarity, though such outlining is not intended on limiting the disclosure) may be a binary option indicator of alignment accuracy such as an "X" (FIG. 5) when the sensor 30h is out of alignment or a check (FIG. 6) when the sensor 30h is within the predetermined alignment tolerances. The second portion 420 of the graphical alignment indicia 350 may also change colors, such as red when the sensor 30h is out of alignment (FIG. 5) to green when the sensor 30h is aligned within the predetermined tolerances (FIG. 6).

It is to be appreciated that the function of the mobile device 320 as disclosed herein is to indicate whether alignment of the sensor 30h is within acceptable tolerances. Additional and/or alternative forms of indicia and/or forms of feedback in general from the mobile device 320 than identified herein is within the scope of the disclosure.

As shown in FIG. 7, in one embodiment, the sensor 30h includes an on-board indicator 430, which may be a pin indicator such as a light emitting diode (LED) or other on-board indicator that provides a signal when the sensor 30h is in or out of alignment with the axis 310. For example, when the sensor 30h is out of alignment, the on-board indicator 430 may be off or a first color, such as red. When the sensor 30h is aligned, the on-board indicator 430 may be on and may be a second color, such as green. The on-board indicator 430, as an alternative to a visual indicator, may be a vibratory indicator or audible indicator that actuates to provide light, vibration or sound (e.g., from a buzzer) as feedback when the sensor 30h is aligned. In one more embodiments, a series of lights on the sensor 30h may activate or deactivate (e.g., turn on or off) depending on the alignment accuracy of the sensor.

The sensor 30h may be programmed to include a set-up mode, which may be accessed by an on-board actuator 440, which may be a button or the like. Upon engaging the on-board actuator 440, the sensor 30h would engage in wireless communications to provide alignment data as shown in FIGS. 5 and 6, or provide visual, vibratory or audible feedback as shown in FIG. 7. In one or more embodiments, set-up mode may be entered when power is first provided and/or restored to the sensor 30h.

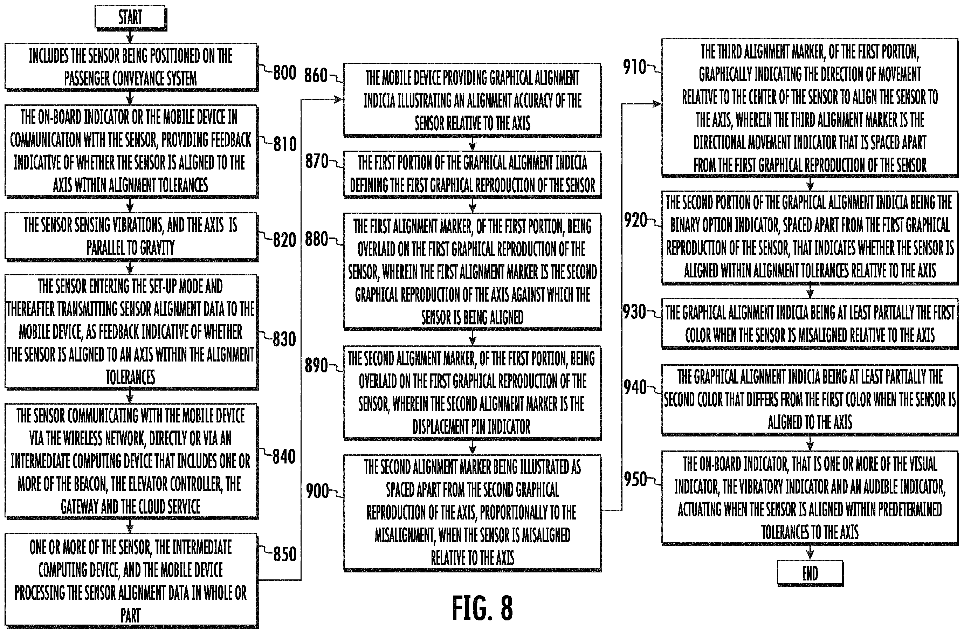

FIG. 8 is a flowchart showing a method for installing the sensor 30h on a passenger conveyance system such as the elevator car 103. As shown in block 800, the method includes the sensor 30h being positioned on the passenger conveyance system (the elevator car 103). As shown in block 810, the method includes the on-board indicator 430 or a mobile device 320 in communication with the sensor 30h, providing feedback indicative of whether the sensor 30h is aligned to the axis 310 within alignment tolerances. As shown in block 820, the method includes the sensor 30h sensing vibrations, and the axis 310 is parallel to gravity.

As shown in block 830, the method includes the sensor 30h entering a set-up mode and thereafter transmitting sensor alignment data to the mobile device 320, as feedback indicative of whether the sensor 30h is aligned to an axis within the alignment tolerances. As shown in block 840, the method includes the sensor 30h communicating with the mobile device 320 via a wireless network 330, directly or via an intermediate computing device that includes one or more of a beacon 220, the elevator controller 115, a gateway 200 (which may a primary gateway 20a or secondary gateway 20b, etc.) and a cloud service 260. As shown in block 850, the method includes one or more of the sensor 30h, the intermediate computing device, and the mobile device 320 processing the sensor 30h alignment data in whole or part. As shown in block 860, the method includes the mobile device 320 providing graphical alignment indicia 350 illustrating an alignment accuracy of the sensor 30h relative to the axis 310.

As shown in block 870, the method includes the first portion 360 of the graphical alignment indicia 350 defining a first graphical reproduction of the sensor 30h. As shown in block 880, the method includes the first alignment marker 370, of the first portion 360, being overlaid on the first graphical reproduction of the sensor 30h. The first alignment marker 370 is a second graphical reproduction of the axis 310 against which the sensor 30h is being aligned. As shown in block 890, the method includes the second alignment marker 380, of the first portion 360, being overlaid on the first graphical reproduction of the sensor 30h. The second alignment marker 380 is a displacement pin indicator. As shown in block 900, the method includes the second alignment marker 380 being illustrated as spaced apart from the second graphical reproduction of the axis 310, proportionally to the misalignment, when the sensor 30h is misaligned relative to the axis 310.

As shown in block 910, the method includes the third alignment marker 390, of the first portion 360, graphically indicating the direction of movement to align the sensor 30h to the axis 310 relative to a center 410 of the sensor 30h. The third alignment marker 390 is the directional movement indicator that is spaced apart from the first graphical reproduction of the sensor 30h. As shown in block 920, the method includes the second portion 420 of the graphical alignment indicia 350 being a binary option indicator, spaced apart from the first graphical reproduction of the sensor 30h, that indicates whether the sensor is aligned within alignment tolerances relative to the axis 310.

As shown in block 930, the method includes the graphical alignment indicia 350 being at least partially a first color when the sensor 30h is misaligned relative to the axis 310. As shown in block 940 the method includes the graphical alignment indicia 350 being at least partially a second color that differs from the first color when the sensor 30h is aligned to the axis 310. As shown in block 950 the method includes the on-board indicator 430, that is one or more of a visual indicator, a vibratory indicator and an audible indicator, actuating when the sensor 30h is aligned within a predetermined tolerance to the axis 310.

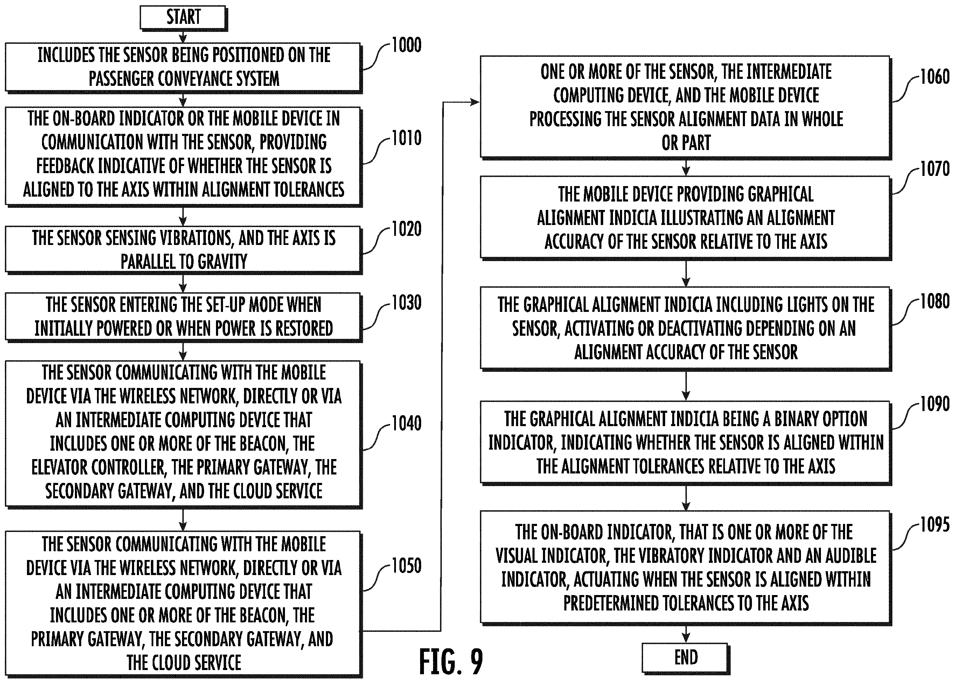

FIG. 9 is another flowchart showing the method for installing the sensor 30h on a passenger conveyance system such as the elevator car 103. FIGs. 8 and 9 are not intended to be read independently of each other but are rather intended on representing variations on describing the features of the disclosed embodiments. Various ones of the blocks in each of FIGs. 8 and 9 therefore overlap in substance. To the extent any substance differs between these FIGs. 8 and 9, such difference is not intended on identifying additions or omissions in the methodology disclosed herein.

As shown in block 1000, the method includes the sensor 30h being positioned on the passenger conveyance system (the elevator car 103). As shown in block 1010, the method includes the on-board indicator 430 or a mobile device 320 in communication with the sensor 30h, providing feedback indicative of whether the sensor 30h is aligned to the axis 310 within alignment tolerances. As shown in block 1020, the method includes the sensor 30h sensing vibrations, and the axis 310 is parallel to gravity. As shown in block 1030, the method includes the sensor 30h entering a set-up mode and thereafter transmitting sensor alignment data to the mobile device 320, as feedback indicative of whether the sensor 30h is aligned to an axis within the alignment tolerances. As shown in block 1040, the method includes the sensor 30h entering the set-up mode when initially powered or when power is restored.

As shown in block 1050, the method includes the sensor 30h communicating with the mobile device 320 via a wireless network 330, directly or via an intermediate computing device that includes one or more of a beacon 220, the elevator controller 116, a gateway 200 (which may a primary gateway 20a or secondary gateway 20b, etc.) and a cloud service 260. As shown in block 1060, the method includes one or more of the sensor 30h, the intermediate computing device, and the mobile device 320 processing the sensor 30h alignment data in whole or part.

As shown in block 1070, the method includes the mobile device 320 providing graphical alignment indicia 350 illustrating an alignment accuracy of the sensor 30h relative to the axis 310. As shown in block 1080, the method includes the graphical alignment indicia 350 including lights on the sensor 30h, activating or deactivating depending on an alignment accuracy of the sensor 30h. As shown in block 1090, the method includes the graphical alignment indicia 350 being a binary option indicator, indicating whether the sensor is aligned within alignment tolerances relative to the axis 310. As shown in block 1095 the method includes the on-board indicator 430, that is one or more of a visual indicator, a vibratory indicator and an audible indicator, actuating when the sensor 30h is aligned within a predetermined tolerance to the axis 310.

Thus the disclosure provides a of sensor orientation indicator allowing for proper mounting of the sensor 30h. The embodiments include a sensor 30h, which has an accelerometer. The sensor 30h may be capable of communicating, directly with smart device via a gateway, information relate to its current mounting orientation and its required mounting orientation. The sensor 30h may have an LED and/or buzzer programed to indicate an alignment correctness of its mounting. The sensor 30h may have LED and/or buzzer logic indicating required change or precision of the mounting. Benefits include obtaining reliable CBM data, and relatively easy repeat proper mounting procedures. The embodiments also provide a relatively simple and clear installation process. The embodiments may result in battery savings due to smaller number of calculations per measuring sample when obtaining CBM data (e.g., at least one calculation per every axis may be saved per every sample).

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for installing a sensor to a passenger conveyance system, comprising:
the sensor configured for being positioned on the passenger conveyance system; and
an on-board indicator or a mobile device in communication with the sensor, configured for providing feedback indicative of whether the sensor is aligned to an axis within an alignment tolerance.

2. The system of claim 1, wherein:
the sensor is configured to sense vibrations, and wherein the axis is parallel to gravity.

3. The system of claim 1 or 2, wherein:
the sensor is configured to enter a set-up mode and thereafter transmit sensor alignment data to the mobile device, as the feedback indicative of whether the sensor is aligned to the axis within the alignment tolerances.

4. The system of claim 3, wherein:
the sensor enters the set-up mode when initially powered or when power is restored.

5. The system of claim 3 or 4, wherein:
the sensor is configured to communicate with the mobile device via a wireless network, directly or via an intermediate computing device that includes one or more of a beacon, an elevator controller, a primary gateway, a secondary gateway, and a cloud service.

6. The system of claim 5, wherein:
one or more of the sensor, the intermediate computing device, and the mobile device is configured to process the sensor alignment data in whole or part.

7. The system of any preceding claim, wherein:
the mobile device is configured to provide a graphical alignment indicia illustrating an alignment accuracy of the sensor relative to the axis.

8. The system of claim 7, wherein:
the graphical alignment indicia includes lights on the sensor that activate or deactivate depending on an alignment accuracy of the sensor.

9. The system of claim 7 or 8, wherein:
the graphical alignment indicia is a binary option indicator, that indicates whether the sensor is aligned within the alignment tolerances relative to the axis.

10. The system of any preceding claim, wherein:
the on-board indicator, that is one or more of a visual indicator, a vibratory indicator and an audible indicator, is configured to actuate when the sensor is aligned within predetermined tolerances to the axis.

11. A method for installing a sensor to a passenger conveyance system, comprising:
the sensor being positioned on the passenger conveyance system; and
an on-board indicator or a mobile device in communication with the sensor, providing feedback indicative of whether the sensor is aligned to an axis within an alignment tolerance.

12. The method of claim 11, comprising:
the sensor sensing vibrations, wherein the axis is parallel to gravity; and/or comprising:
the sensor entering a set-up mode and thereafter transmitting sensor alignment data to the mobile device, as the feedback indicative of whether the sensor is aligned to the axis within the alignment tolerances; and optionally comprising:
the sensor entering the set-up mode when initially powered or when power is restored.

13. The method of claim 12, comprising:
the sensor communicating with the mobile device via a wireless network, directly or via an intermediate computing device that includes one or more of a beacon, an elevator controller, a primary gateway, a secondary gateway, and a cloud service; and optionally comprising: one or more of the sensor, the intermediate computing device, and the mobile device processing the sensor alignment data in whole or part.

14. The method of any of claims 11 to 13, comprising:
the mobile device providing graphical alignment indicia illustrating an alignment accuracy of the sensor relative to the axis; and optionally comprising:
the graphical alignment indicia including lights on the sensor, activating or deactivating depending on an alignment accuracy of the sensor; and/or optionally comprising:
the graphical alignment indicia being a binary option indicator, indicating whether the sensor is aligned within the alignment tolerances relative to the axis.

15. The method of any of claims 11 to 14, comprising:
the on-board indicator, that is one or more of a visual indicator, a vibratory indicator and an audible indicator, actuating when the sensor is aligned within predetermined tolerances to the axis.
